# EUROPÄISCHE PATENTSCHRIFT

(11) **EP 2 907 231 B1**
(45) Veröffentlichungstag und Bekanntmachung des Hinweises auf die Patenterteilung: **19.08.2020**
(21) Anmeldenummer: 13799499.2
(22) Anmeldetag: 20.11.2013
(51) Int. Cl.: H02M 3/335, H02M 1/00

(54) **ANORDNUNG MIT POTENZIALGETRENNTER STROMVERSORGUNGSEINRICHTUNG**
ARRANGEMENT HAVING A POTENTIAL-ISOLATED ELECTRICAL POWER SUPPLY DEVICE
SYSTÈME POURVU D'UN DISPOSITIF D'ALIMENTATION ÉLECTRIQUE À SÉPARATION DE POTENTIEL

(30) Priorität: 14.12.2012 DE 102012223274
(43) Veröffentlichungstag der Anmeldung: 19.08.2015
(73) Patentinhaber: Siemens Mobility GmbH, 81739 München (DE)
(72) Erfinder: EUE, Wolfgang, 38162 Cremlingen (DE); OKYERE, Philip, Fosu, 38100 Braunschweig (DE)
(86) Internationale Anmeldenummer: PCT/EP2013/074258
(87) Internationale Veröffentlichungsnummer: WO 2014/090532

(56) Entgegenhaltungen:
- DE-A1- 3 828 816
- US-A1- 2005 248 965
- US-A1- 2010 202 167
- US-A1- 2011 292 691

## Beschreibung

Die Erfindung bezieht sich auf eine Anordnung mit einer potenzialgetrennten Stromversorgungseinrichtung mit den Merkmalen gemäß dem Oberbegriff des Patentanspruchs 1, beispielsweise für den Einsatz in einer Eisenbahnanlage. Eine solche Anordnung ist aus der veröffentlichten Patentanmeldung US 2010/202167 A1 bekannt.

Das Dokument US 2011/292691 A1 beschreibt einen isolierten Gleichspannungswandler vom EIN / AUS-Typ, der elektromagnetische Energie in einem Haupttransformator während einer EIN-Periode eines Leistungsschalters speichert und die elektromagnetische Energie während einer AUS-Periode des Leistungsschalters an einen Ausgang abgibt. Eine Ausgangsspannungssteuerung kann ohne die Anwendung eines Fotokopplers erfolgen. Eine Integrationsschaltung mit einem Widerstand und einem Kondensator erzeugt eine Rampenwelle; die Rampenwelle wird über einen Kondensator einer Referenzspannung einer Referenzspannungsquelle überlagert. Ein Komparator vergleicht eine Spannung, die proportional zu einer Ausgangsspannung eines Wandlers ist, mit der Referenzspannung, der die Rampenwelle überlagert wurde, und überträgt ein Inversionstaktsignal über einen Impulstransformator. Während einer EIN-Periode eines Leistungsschalters wird der Komparator invertiert und der Leistungsschalter ausgeschaltet, wenn die Spannung, die proportional zur Ausgangsspannung ist, die Referenzspannung überschreitet, der die Rampenwelle überlagert wurde.

Bekannte potenzialgetrennte Stromversorgungseinrichtungen weisen einen Eingang zum Anlegen einer Eingangsspannung, einen vom Eingang potenzialgetrennten Ausgang zur Ausgabe einer Ausgangsspannung und einen Steueranschluss auf, an dem ein Steuersignal zum Erhöhen oder Erniedrigen der Ausgangsspannung angelegt werden kann. Mit einem Spannungsbewertungsmodul, das an den Ausgang der Stromversorgungseinrichtung angeschlossen wird, kann ein Rückmeldesignal gebildet werden, das die Spannungshöhe der Ausgangsspannung betrifft. Dieses Rückmeldesignal kann zur Ansteuerung der potenzialgetrennten Stromversorgungseinrichtung verwendet werden, um eine vorgegebene Spannungshöhe der Ausgangsspannung einzustellen.

Bei vorbekannten Anordnungen der beschriebenen Art besteht das Problem, dass die potentialgetrennte Stromversorgungseinrichtung ihre Wandleraufgabe nur noch unzulänglich erfüllen kann, wenn der Eingangsspannungsbereich am Eingang der Stromversorgungseinrichtung sehr groß ist. Deshalb müssen bei großen Eingangsspannungsbereichen häufig Kompromisse beim Wirkungsgrad und/oder bei der Genauigkeit der Ausregelung der Ausgangsspannung eingegangen werden. Zurückzuführen ist dies auf die Potentialtrennung, durch die die Funktionen der Stromversorgungseinrichtung zwischen der Eingangsseite und der Ausgangsseite aufgeteilt werden müssen; die Ausgangsseite könnte besser funktionieren, wenn sie mehr Informationen von der Eingangsseite hätte.

Der Erfindung liegt demgemäß die Aufgabe zugrunde, eine Anordnung anzugeben, die auch im Falle eines großen Eingangsspannungsbereichs zuverlässig arbeiten kann, aber dennoch mit einer geringen Anzahl an Komponenten auskommt.

Diese Aufgabe wird erfindungsgemäß durch eine Anordnung gemäß Patentanspruch 1 und Patentanspruch 2 gelöst. Vorteilhafte Ausgestaltungen der erfindungsgemäßen Anordnung sind in Unteransprüchen angegeben.

Danach ist erfindungsgemäß vorgesehen, dass das Spannungsbewertungsmodul einen Soll-Ist-Vergleicher und ein frequenzabhängiges Steuerglied umfasst, wobei der eine Soll-Ist-Vergleicher ein Vergleichssignal in Abhängigkeit von der Spannungshöhe der Ausgangsspannung erzeugt und das frequenzabhängige Steuerglied die Arbeitsweise des Spannungsbewertungsmoduls in Abhängigkeit von dem Arbeitsfrequenzspektrum der Stromversorgungseinrichtung beeinflusst,
- indem ein zwischen einem Kondensator und einem Bezugspotential geschalteter Transistor durch Öffnen einen Kondensator von dem Soll-Ist-Vergleicher trennen kann,
- und indem durch Auf- und Entladen des Kondensators, das Ausgangssignal des Soll-Ist-Vergleichers und damit die Änderungsgeschwindigkeit des Rückmeldesignals verändert wird.

Abweichend hiervon kann erfindungsgemäß auch vorgesehen sein, dass das Spannungsbewertungsmodul zumindest zwei unterschiedlich arbeitende Soll-Ist-Vergleicher, die unterschiedliche Ausgangssignale erzeugen, und ein frequenzabhängiges Steuerglied umfasst, wobei das frequenzabhängige Steuerglied derart ausgestaltet ist, dass es von den Soll-Ist-Vergleichern jeweils einen in Abhängigkeit von dem Arbeitsfrequenzspektrum der Stromversorgungseinrichtung zur Erzeugung des Rückmeldesignals auswählt.

Ein wesentlicher Vorteil der erfindungsgemäßen Anordnung ist darin zu sehen, dass bei dieser eine Regelung der Ausgangsspannung nicht nur in Abhängigkeit von der Spannungshöhe der Ausgangsspannung erfolgt, sondern darüber hinaus auch in Abhängigkeit von dem Arbeitsfrequenzspektrum der Stromversorgungseinrichtung. Das Arbeitsfrequenzspektrum der Stromversorgungseinrichtung ermöglicht es nämlich, auf die Höhe der Eingangsspannung am Eingang der potentialgetrennten Stromversorgungseinrichtung zu schließen und die Regelung der Ausgangsspannung optimal an die Höhe der eingangsseitigen Eingangsspannung anzupassen. Aufgrund der erfindungsgemäß vorgesehenen Abhängigkeit des Rückmeldesignals sowohl von der Spannungshöhe der Ausgangsspannung als auch von dem Arbeitsfrequenzspektrum lässt sich somit eine optimale Arbeitsweise der Anordnung insgesamt und eine optimale Regelung der Ausgangsspannung am Ausgang der potentialgetrennten Stromversorgungseinrichtung erreichen, selbst wenn der Eingangsspannungsbereich der Eingangsspannung sehr groß ist.

Ein weiterer wesentlicher Vorteil der erfindungsgemäßen Anordnung besteht darin, dass auf der Ausgangsseite der Stromversorgungseinrichtung eine Information über die Eingangsspannung am Eingang der Stromversorgungseinrichtung verarbeitet werden kann, ohne dass zum Übersenden dieser Information weitere, die Potenzialtrennung überbrückende Komponenten erforderlich wären.

Um zu erreichen, dass sich die eingangsseitig anliegende Eingangsspannung besonders deutlich im Arbeitsfrequenzspektrum der Stromversorgungseinrichtung niederschlägt, wird es als vorteilhaft angesehen, wenn die Stromversorgungseinrichtung derart ausgestaltet ist, dass sie in Abhängigkeit von der Höhe der an die Stromversorgungseinrichtung angelegten Eingangsspannung und/oder in Abhängigkeit von der Höhe des von der Stromversorgungseinrichtung aufgenommenen Eingangsstroms ihr Arbeitsfrequenzspektrum verändert und durch Frequenzmodulation der Arbeitsfrequenz eine Information über die Höhe der Eingangsspannung, die Höhe des Eingangsstromes oder über beides an die Ausgangsseite liefert. Bei dieser Ausgestaltung wird somit die Information über die Höhe der eingangsseitig anliegenden Spannung über das Arbeitsfrequenzspektrum der Stromversorgungseinrichtung an den Ausgang derart übertragen, dass auf der von der Eingangsseite potentialgetrennten Ausgangsseite eine Information über die Höhe der Eingangsspannung vorliegt, und zwar codiert über die Arbeitsfrequenz bzw. das Arbeitsfrequenzspektrum der potentialgetrennten Stromversorgungseinrichtung.

Eine Anpassung des Arbeitsfrequenzspektrums an die Höhe der eingangsseitig anliegenden Eingangsspannung lässt sich in vorteilhafter Weise beispielsweise erreichen, indem die Stromversorgungseinrichtung derart ausgestaltet wird, dass sie ein erstes Arbeitsfrequenzspektrum auswählt, wenn die Eingangsspannung und/oder der Eingangsstrom einen vorgegebenen Schwellenwert überschreitet, und ein zweites Arbeitsfrequenzspektrum auswählt, wenn die Eingangsspannung und/oder der Eingangsstrom den vorgegebenen Schwellenwert unterschreitet.

Bezüglich der Ausgestaltung des Spannungsbewertungsmoduls wird es als vorteilhaft angesehen, wenn ein frequenzabhängiges Steuerglied des Spannungsbewertungsmoduls mindestens ein Frequenzfilter umfasst, das anhand von Spannungssprüngen, Spannungsänderungen oder Wechselspannungsanteilen der Ausgangsspannung, der Ausgangsspannung vor einer Gleichrichtung, der Spannung an einem Zwischenabgriff einer ausgangsseitigen Wicklung des Transformators oder der Spannung an einer Hilfswicklung des Transformators die Arbeitsweise des Spannungsbewertungsmoduls von einer ersten Arbeitsweise auf eine zweite Arbeitsweise oder umgekehrt umstellt, wobei die Spannungssprünge, Spannungsänderungen oder Wechselspannungsanteile die Arbeitsfrequenz oder die Arbeitsfrequenzen der potenzialgetrennten Stromversorgungseinrichtung repräsentieren.

Als vorteilhaft wird es angesehen, wenn der Soll-Ist-Vergleicher einen Steueranschluss, einen Spannungsanschluss und einen Ausgang aufweist, wobei der Spannungsanschluss des Soll-Ist-Vergleichers mittelbar oder unmittelbar mit der Ausgangsspannung der Stromversorgungseinrichtung beaufschlagt ist, wobei der Steueranschluss des Soll-Ist-Vergleichers mit dem frequenzabhängigen Steuerglied verbunden ist und von diesem angesteuert wird und wobei das frequenzabhängige Steuerglied derart ausgestaltet ist, dass es das Ausgangssignal des Soll-Ist-Vergleichers durch Ansteuern des Steueranschlusses des Soll-Ist-Vergleichers in Abhängigkeit von dem Arbeitsfrequenzspektrum der Stromversorgungseinrichtung beeinflusst.

Als Rückmeldesignal des Spannungsbewertungsmoduls wird vorzugsweise das Ausgangssignal des Soll-Ist-Vergleichers ausgegeben. Alternativ wird es als vorteilhaft angesehen, wenn das frequenzabhängige Steuerglied zwischen den Soll-Ist-Vergleicher und den Ausgang des Spannungsbewertungsmoduls derart geschaltet ist, dass es das Ausgangssignal des Soll-Ist-Vergleichers in Abhängigkeit von dem Arbeitsfrequenzspektrum der Stromversorgungseinrichtung verändern kann, und als Rückmeldesignal des Spannungsbewertungsmoduls das von dem frequenzabhängigen Steuerglied veränderte Ausgangssignal des Soll-Ist-Vergleichers ausgegeben wird. Auch kann vorgesehen sein, dass das Spannungsbewertungsmodul zumindest zwei unterschiedlich arbeitende Soll-Ist-Vergleicher aufweist, die unterschiedliche Ausgangssignale erzeugen, und das frequenzabhängige Steuerglied derart ausgestaltet ist, dass es von den Soll-Ist-Vergleichern jeweils einen zur Erzeugung des Rückmeldesignals auswählt, und zwar in Abhängigkeit von dem Arbeitsfrequenzspektrum der Stromversorgungseinrichtung.

Das Frequenzfilter umfasst vorzugsweise mindestens einen Bandpass.

Bei einem Verfahren zum Erzeugen einer Ausgangsspannung an einem Ausgang einer potenzialgetrennten Stromversorgungseinrichtung, wobei an einem Eingang der Stromversorgungseinrichtung eine Eingangsspannung angelegt wird, ein Rückmeldesignal erzeugt und an die Steuereinrichtung zurückgesendet wird, mit dem das Über- oder Unterschreiten zumindest einer Sollspannungshöhe am Ausgang der Stromversorgungseinrichtung angezeigt wird, und in Abhängigkeit von einem Rückmeldesignal an einem Steueranschluss der Stromversorgungseinrichtung mit einer Steuereinrichtung ein Steuersignal zum Erhöhen oder Erniedrigen der Ausgangsspannung der Stromversorgungseinrichtung angelegt wird, kann vorgesehen sein, dass das Rückmeldesignal zusätzlich auch in Abhängigkeit von dem Arbeitsfrequenzspektrum der Stromversorgungseinrichtung erzeugt wird.

Als vorteilhaft wird es angesehen, wenn die Änderungsgeschwindigkeit des Rückmeldesignals in Abhängigkeit von dem Arbeitsfrequenzspektrum der Stromversorgungseinrichtung verändert wird.

Ergänzend kann vorgesehen sein, dass das Arbeitsfrequenzspektrum der Stromversorgungseinrichtung in Abhängigkeit von der Höhe der angelegten Eingangsspannung und/oder in Abhängigkeit von der Höhe des aufgenommenen Eingangsstroms verändert wird, mit der Folge, dass sich eine regelungstechnisch vorteilhafte Abhängigkeit der Änderungsgeschwindigkeit des Rückmeldesignals in Abhängigkeit von Eingangsspannung und/oder Eingangsstrom ergibt.

Das Spannungsbewertungsmodul kann beispielsweise durch einen Signalprozessor gebildet sein, der derart programmiert ist, dass er die oben beschriebene Regelung der Ausgangsspannung unter Berücksichtigung des Arbeitsfrequenzspektrums der Stromversorgungseinrichtung durchführen kann. Das erwähnte frequenzabhängige Steuerglied und/oder der erwähnte Soll-Ist-Vergleicher können beispielsweise durch Softwarekomponenten gebildet sein, mit denen der Signalprozessor programmiert ist. So kann mit einem einzigen Baustein zur digitalen Signalverarbeitung oftmals die Funktion zweier oder mehr herkömmlicher potentialgetrennter Stromversorgungseinrichtungen zusammen mit der erfindungsgemäßen Funktionserweiterung realisiert werden.

Die Erfindung wird nachfolgend anhand von Ausführungsbeispielen näher erläutert; dabei zeigen beispielhaft:
- Figur 1: ein Ausführungsbeispiel für eine erfindungsgemäße Anordnung, bei der die Arbeitsweise eines Soll-Ist-Vergleichers in Abhängigkeit von dem Arbeitsfrequenzspektrum einer Pulsweitenmodulationseinrichtung beeinflusst wird,
- Figur 2: ein Ausführungsbeispiel für eine erfindungsgemäße Anordnung, bei der das Ausgangssignal eines Soll-Ist-Vergleichers in Abhängigkeit von dem Arbeitsfrequenzspektrum einer Pulsweitenmodulationseinrichtung beeinflusst wird, und
- Figur 3: ein Ausführungsbeispiel für eine erfindungsgemäße Anordnung, bei der zwei Soll-Ist-Vergleicher vorhanden sind, von denen einer in Abhängigkeit von dem Arbeitsfrequenzspektrum der Pulsweitenmodulationseinrichtung für die Regelung der Ausgangsspannung ausgewählt wird.

In den Figuren werden der Übersicht halber für identische oder vergleichbare Komponenten stets dieselben Bezugszeichen verwendet.

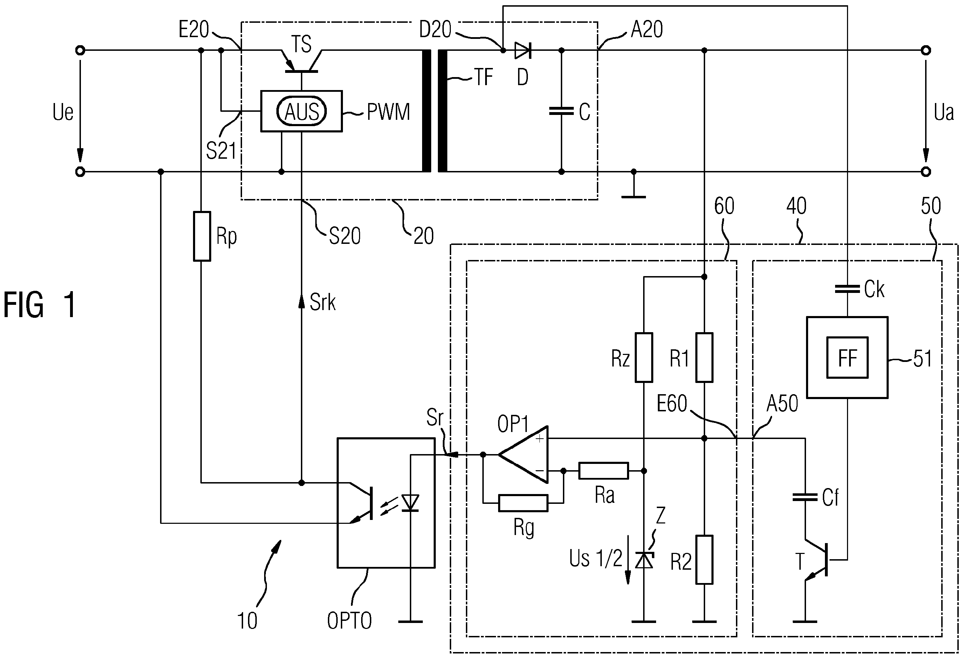

In der Figur 1 erkennt man eine Anordnung 10 mit einer potenzialgetrennten Stromversorgungseinrichtung 20, an deren Eingang E20 eine Eingangsspannung Ue angelegt werden kann. Die Stromversorgungseinrichtung 20 weist eingangsseitig einen Schalttransistor Ts auf, der von einer Pulsweitenmodulationseinrichtung PWM angesteuert wird. Dem Schalttransistor Ts nachgeordnet ist ein Transformator TF, der eine Spannungsumsetzung und eine Potenzialtrennung zwischen dem Eingang E20 der Stromversorgungseinrichtung 20 und dem Ausgang A20 hervorruft. Auf der Ausgangsseite des Transformators TF sind eine Diode D sowie ein Kondensator C angeschlossen. Der Kondensator C liegt zu dem Ausgang A20 parallel, so dass die an dem Kondensator C abfallende Spannung die Ausgangsspannung Ua der Stromversorgungseinrichtung 20 bildet.

Zur Steuerung der Pulsweitenmodulationseinrichtung PWM weist die Stromversorgungseinrichtung 20 zwei Steueranschlüsse S20 und S21 auf. An den Steueranschluss S20, der als Rückmeldeeingang wirkt und nachfolgend demgemäß auch Rückmeldeeingang S20 genannt wird, ist ein Fototransistor eines Optokopplers OPTO angeschlossen; der Steueranschluss S21 kann mit der Eingangsspannung Ue - wovon nachfolgend beispielhaft ausgegangen wird -, einer dazu proportionalen Messgröße oder einer den Eingangsstrom in die Stromversorgungseinrichtung 20 angebenden Messgröße beaufschlagt werden.

Im Nachfolgenden wird beispielhaft davon ausgegangen, dass der Optokoppler OPTO mit Hilfe eines Steuersignals in Form eines rückgekoppelten Rückmeldesignals Srk, das am Rückmeldeeingang S20 in die Stromversorgungseinrichtung 20 und damit in die Pulsweitenmodulationseinrichtung PWM eingespeist wird, die Arbeitsweise der Stromversorgungseinrichtung 20 und damit die Ausgangsspannung Ua am Ausgang A20 steuern beziehungsweise bei Vorliegen eines geeigneten Rückkoppelsignals regeln kann. Dabei wird - ebenfalls nur beispielhaft - davon ausgegangen, dass bei Anlegen eines rückgekoppelten Rückmeldesignals Srk mit einem hohen Signalpegel die Pulsweitenmodulationseinrichtung PWM den Schalttransistor Ts derart ansteuern wird, dass sich die Ausgangsspannung Ua am Ausgang A20 erhöhen wird. Im Falle eines rückgekoppelten Rückmeldesignals Srk mit einem niedrigen Signalpegel wird die Pulsweitenmodulationseinrichtung PWM mittels des Schalttransistors Ts für eine Erniedrigung der Ausgangsspannung Ua am Ausgang A20 sorgen. Die hier vorgenommene Zuordnung der Signalpegel zum Erhöhen oder Erniedrigen der Ausgangsspannung Ua ist nur beispielhaft zu verstehen; die Pulsweitenmodulationseinrichtung PWM könnte auch umgekehrt arbeiten und bei Anliegen eines rückgekoppelten Rückmeldesignals Srk mit einem niedrigen Signalpegel die Ausgangsspannung Ua erhöhen und bei Anliegen eines rückgekoppelten Rückmeldesignals Srk mit einem hohen Signalpegel die Ausgangsspannung Ua erniedrigen.

Die Pulsweitenmodulationseinrichtung PWM der Stromversorgungseinrichtung 20 ist bei dem Ausführungsbeispiel gemäß Figur 1 außerdem derart ausgestaltet, dass sie ihr Arbeitsfrequenzspektrum, mit dem sie die Pulsweitenmodulation durchführt, in Abhängigkeit von der Höhe der an die Stromversorgungseinrichtung 20 angelegten Eingangsspannung Ue verändert. Um dies zu ermöglichen, ist in der Pulsweitenmodulationseinrichtung PWM eine Auswahleinrichtung AUS und an der Stromversorgungseinrichtung 20 der Steueranschluss S21 vorgesehen, an dem die Eingangsspannung oder eine dazu proportionale Größe in die Auswahleinrichtung AUS der Pulsweitenmodulationseinrichtung PWM eingespeist wird. Beispielsweise wird die Pulsweitenmodulationseinrichtung PWM bzw. deren Auswahleinrichtung AUS ein erstes Arbeitsfrequenzspektrum auswählen, wenn die Eingangsspannung Ue einen vorgegebenen Schwellenwert überschreitet, und ein zweites Arbeitsfrequenzspektrum auswählen, wenn die Eingangsspannung den vorgegebenen Schwellenwert unterschreitet.

Die Pulsweitenmodulationseinrichtung PWM der Stromversorgungseinrichtung 20 kann eine der folgenden, nur beispielhaft zu verstehenden Arbeitsweisen durchführen:

### Variante 1:

Im Falle einer Eingangsspannung Ue kleiner als 250 V wird eine Ansteuerung des Transistors Ts mit einer Arbeitsfrequenz von beispielsweise 50 kHz durchgeführt, und zur Pulsweitensteuerung wird die Pulsweite des 50kHz-Signals verändert. Im Falle einer Eingangsspannung größer als 250 V erfolgt die Ansteuerung des Transistors Ts mit einer anderen Arbeitsfrequenz von beispielsweise 10 kHz, und es wird zur Pulsweitensteuerung die Pulsweite des 10 kHz-Signals verändert. Es handelt sich bei der Variante 1 also um eine Umschaltung zwischen zwei Festfrequenzen für die Pulsweitenmodulation.

### Variante 2:

Im Falle einer Eingangsspannung Ue kleiner als 250 V wird eine Ansteuerung des Transistors Ts mit einer sich zeitlich ändernden Arbeitsfrequenz durchgeführt, die beispielsweise regelmäßig zwischen 10 und 50 kHz wechselt, und es wird zur Pulsweitensteuerung die Pulsweite das jeweiligen 10kHz- oder 50kHz-Signals verändert. Im Falle einer Eingangsspannung Ue größer als 250 V erfolgt die Ansteuerung des Transistors Ts beispielsweise mit einer festen Arbeitsfrequenz von beispielsweise 10 kHz. Es handelt sich bei der Variante 2 also um eine Umschaltung zwischen einer zeitlich variablen Frequenz bzw. Frequenzmodulation und einer Festfrequenz, wobei im Rahmen der Pulsweitensteuerung die Pulsweite der jeweiligen Arbeitsfrequenz verändert wird.

### Variante 3:

Im Falle einer Eingangsspannung Ue kleiner als 250 V wird eine Ansteuerung des Transistors Ts mit einer sich zeitlich ändernden Arbeitsfrequenz durchgeführt, die beispielsweise regelmäßig zwischen 45 und 55 kHz wechselt. Im Falle einer Eingangsspannung Ue größer als 250 V erfolgt die Ansteuerung des Transistors Ts mit einer sich zeitlich ändernden pulsweitengesteuerten Arbeitsfrequenz, die beispielsweise regelmäßig zwischen 5 und 15 kHz wechselt. Es handelt sich bei der Variante 3 also um eine Umschaltung zwischen einer ersten zeitlich variablen Frequenz bzw. Frequenzmodulation und einer zweiten zeitlich variablen Frequenz bzw. Frequenzmodulation und um eine Pulsweitensteuerung der Pulsweite der jeweils vorliegenden Arbeitsfrequenz.

Bei den oben beschriebenen Varianten wurde beispielhaft davon ausgegangen, dass zwischen Eingangsspannungen kleiner oder größer als 250 V unterschieden wird; selbstverständlich kann eine Unterscheidung auch zwischen mehr als zwei Spannungsbereichen (beispielsweise zwischen drei, vier oder fünf) erfolgen, und es kann jedem Spannungsbereich ein individuelles Arbeitsfrequenzspektrum zugeordnet werden. Auch muss keine Unterscheidung zwischen größer oder kleiner als 250 V erfolgen, stattdessen können auch andere Spannungswerte als Schwelle oder Schwellen herangezogen werden.

Bei den oben beschriebenen Varianten wurde weiterhin beispielhaft davon ausgegangen, dass die Eingangsspannung die einzig relevante Information für die Auswahleinrichtung AUS der Pulsweitenmodulationseinrichtung PWM zur Auswahl des Arbeitsfrequenzspektrums ist. Da bei ansonsten gleichen Lastverhältnissen eine höhere Eingangsspannung zu einem niedrigeren Eingangsstrom führt, ist es ebenso zweckmäßig, den Eingangsstrom als einzig relevante Information für die Auswahleinrichtung AUS zur Auswahl des Arbeitsfrequenzspektrums heranzuziehen. Um auch bei variablen Lastverhältnissen eine besonders zweckmäßige Anpassung zu erzielen, wird eine entsprechend ausgeformte Auswahleinrichtung AUS Eingangsspannung und Eingangsstrom bei der Auswahl des Arbeitsfrequenzspektrums berücksichtigen.

In der Figur 1 lässt sich erkennen, dass an den Ausgang A20 der Stromversorgungseinrichtung 20 ein Spannungsbewertungsmodul 40 angeschlossen ist, das über einen Optokoppler OPTO auf die Pulsweitenmodulationseinrichtung PWM der Stromversorgungseinrichtung 20 zurückwirkt. So erzeugt das Spannungsbewertungsmodul 40 ein Rückmeldesignal Sr, das in den Optokoppler OPTO eingespeist und an einem über einen Vorwiderstand Rp mit der Eingangsspannung Ue verbundenen Rückmeldeeingang S20 der Stromversorgungseinrichtung 20 zu einem rückgekoppelten Rückmeldesignal Srk wird.

Bei dem Ausführungsbeispiel gemäß Figur 1 wird beispielhaft davon ausgegangen, dass bei einem Rückmeldesignal Sr mit einem hohen Signalpegel der Optokoppler OPTO durchschalten wird, so dass der Signalpegel am Rückmeldeeingang S20 der Stromversorgungseinrichtung 20 niedrig sein wird, weil der Fototransistor des Optokopplers OPTO durchschalten wird. In entsprechender Weise wird bei einem Rückmeldesignal Sr mit einem kleinen Signalpegel der Optokoppler OPTO den Fototransistor nicht durchschalten, so dass sich am Rückmeldeeingang S20 ein rückgekoppeltes Rückmeldesignal Srk mit einem hohen Spannungspegel bilden wird. Aufgrund der Beschaltung des Optokopplers OPTO kommt es also zu einer Invertierung der Signalpegel durch den Optokoppler OPTO, wobei diese Ausführungsform auch hier nur beispielhaft zu verstehen ist.

Die Figur 1 zeigt außerdem den Aufbau des Spannungsbewertungsmoduls 40 näher im Detail. Es lässt sich ein frequenzabhängiges Steuerglied 50 erkennen, das an den Ausgang D20 der Stromversorgungseinrichtung 20 angeschlossen ist. Das frequenzabhängige Steuerglied 50 weist einen Koppelkondensator Ck zum Anschluss an den Ausgang D20, eine Umschalteinrichtung 51 mit einem integrierten Frequenzfilter FF, einen Transistor T und einen Kondensator Cf auf, der einen Ausgangsanschluss A50 des frequenzabhängigen Steuerglieds 50 bildet.

Der Ausgang des frequenzabhängigen Steuerglieds 50, dessen Arbeitsweise weiter unten noch näher erläutert wird, ist an einen Eingang E60 eines Soll-Ist-Vergleichers 60 angeschlossen. Der Soll-Ist-Vergleicher 60 weist zwei Widerstände R1 und R2, eine Zenerdiode Z, einen Vorwiderstand Rz für die Zenerdiode Z und einen Operationsverstärker OP1 auf.

Die beiden Widerstände R1 und R2 bilden einen Spannungsteiler, wobei die am Spannungsteiler abfallende Spannung von der Ausgangsspannung Ua der potenzialgetrennten Stromversorgungseinrichtung 20 und dem Schaltzustand des Transistors T des frequenzabhängigen Steuerglieds 50 abhängt: Ist der Transistor T des frequenzabhängigen Steuerglieds 50 nicht durchgeschaltet bzw. geöffnet, so ist der Kondensator Cf vom Soll-Ist-Vergleicher 60 getrennt, so dass die Spannung am Pluseingang des Operationsverstärkers OP1 allein durch die beiden Widerstände R1 und R2 und die Ausgangsspannung Ua bestimmt ist. Ist hingegen der Transistor T durchgeschaltet, so bilden der Widerstand R2 und der Kondensator Cf eine Parallelschaltung, so dass das Teilerverhältnis des Spannungsteilers während des Auf- und Entladens des Kondensators Cf, das Ausgangssignal des Soll-Ist-Vergleichers 60 und damit die Änderungsgeschwindigkeit des Rückmeldesignals Sr verändert wird.

Nachfolgend soll zunächst beispielhaft ein möglicher Aufbau und eine mögliche Arbeitsweise des Soll-Ist-Vergleichers 60 näher erläutert werden; anschließend wird der Einfluss des frequenzabhängigen Steuerglieds 50 auf die Arbeitsweise des Soll-Ist-Vergleichers 60 nochmals beleuchtet:

### 1. Arbeitsweise des Soll-Ist-Vergleichers 60:

Bei dem Ausführungsbeispiel gemäß Figur 1 ist der Minuseingang des Operationsverstärkers OP1 mit der Zenerdiode oder dem Referenzelement Z verbunden, die mit dem Vorwiderstand Rz an die Ausgangsspannung Ua am Ausgang A20 angeschlossen ist. Der Operationsverstärker OP1 erzeugt somit an seinem Ausgang in Abhängigkeit von der Spannungsdifferenz zwischen dem Pluseingang und dem Minuseingang ein Ausgangssignal, das als Rückmeldesignal Sr in den Optokoppler OPTO eingespeist wird. Die Verstärkung des Operationsverstärkers OP1 wird durch die beiden Widerstände Ra und Rg bestimmt. Die folgende Beschreibung des Ausführungsbeispiels erfolgt anhand einer Variante mit besonders großer Verstärkung und demzufolge auf "Ausgangsspannung zu hoch" und "Ausgangsspannung zu niedrig" begrenzter Signalisierung. Die ebenso möglichen Varianten mit geringerer Verstärkung und damit differenzierterer Signalisierung der Abweichungen zwischen Soll- und Ist-Ausgangsspannung Ua werden nicht beschrieben.

Wird aufgrund der Ansteuerung der Pulsweitenmodulationseinrichtung PWM die Ausgangsspannung Ua die Sollspannungshöhe überschreiten, so wird der Operationsverstärker OP1 des Soll-Ist-Vergleichers 60 ein Ausgangssignal mit einem hohen Signalpegel erzeugen, so dass der Signalpegel des rückgekoppelten Rückmeldesignals Srk am Ausgang des Optokopplers OPTO sinkt. In diesem Falle wird der Stromversorgungseinrichtung 20 mitgeteilt, dass die Ausgangsspannung Ua am Ausgang A20 zu hoch wird. Wie bereits erwähnt, wird bei Anliegen eines Steuersignals Srk mit einem niedrigen Signalpegel die Pulsweitenmodulationseinrichtung PWM die Ansteuerung des Schalttransistors Ts derart vornehmen, dass die Ausgangsspannung Ua am Ausgang A20 wieder sinkt.

Sinkt aufgrund der entsprechenden Ansteuerung der Pulsweitenmodulationseinrichtung PWM im Weiteren die Ausgangsspannung Ua unter die Sollspannungshöhe, so wird die Spannung im Spannungsteiler R1/R2 einen entsprechenden Spannungswert der Zenerdiode oder des Referenzelements Z unterschreiten, so dass der Operationsverstärker OP1 ein Ausgangssignal beziehungsweise Rückmeldesignal Sr mit einem niedrigen Signalpegel erzeugt. Dieser niedrige Signalpegel wird dazu führen, dass der Fototransistor des Optokopplers OPTO geöffnet wird. Demgemäß wird das Potenzial am Rückmeldeeingang S20 der Stromversorgungseinrichtung 20 ansteigen und einen hohen Spannungspegel annehmen. Durch ein Steuersignal Srk mit einem hohen Spannungspegel wird der Pulsweitenmodulationseinrichtung PWM mitgeteilt, dass die Ausgangsspannung Ua zu niedrig ist und wieder erhöht werden soll.

In der genannten Weise kann der Soll-Ist-Vergleicher 60 die Stromversorgungseinrichtung 20 derart regeln, dass am Ausgang A20 die gewünschte Ausgangsspannung Ua erzeugt wird. Die Pulsweitenmodulationseinrichtung PWM berücksichtigt beim rückgekoppelten Rückmeldesignal Srk üblicherweise nicht nur den Signalpegel selbst, sondern auch den zeitlichen Verlauf von Änderungen des Signalpegels. Erst unter Berücksichtigung des zeitlichen Verlaufs des rückgekoppelten Rückmeldesignals Srk wird eine regelungstechnisch optimierte Ausregelung der Ausgangsspannung Ua erreicht.

### 2. Einfluss des frequenzabhängigen Steuerglieds 50:

Die Funktion des frequenzabhängigen Steuerglieds 50 besteht darin, die Arbeitsweise des Soll-Ist-Vergleichers 60 bzw. die Arbeitsweise der Regelschleife an die jeweilige Höhe der Eingangsspannung Ue optimal anzupassen. Eine solche Anpassung soll nachfolgend anhand eines Ausführungsbeispiels näher erläutert werden, wobei von der Zuordnung der Arbeitsfrequenzspektren zur Eingangsspannung Ue gemäß obiger Variante 3 ausgegangen wird, bei der im Falle einer Eingangsspannung Ue < 250 V eine Ansteuerung des Transistors Ts mit einer sich zeitlich ändernden, 45 oder 55 kHz betragenden Arbeitsfrequenz und im Falle einer Eingangsspannung Ue > 250 V eine Ansteuerung des Transistors Ts mit einer sich zeitlich ändernden, 5 oder 15 kHz betragenden Arbeitsfrequenz erfolgt.

Um beispielsweise zu vermeiden, dass bei einer Eingangsspannung Ue über 250 V ein zu schnelles bzw. zu häufiges Umschalten des Rückmeldesignals Sr und damit eine zu schnelle zeitliche Änderung des rückgekoppelten Rückmeldesignals Srk auftritt, kann die Arbeitsweise des Soll-Ist-Vergleichers 60 von dem frequenzabhängigen Steuerglied 50 in Abhängigkeit von der Höhe der Eingangsspannung Ue umgeschaltet werden. Die Erkennung der Höhe der Eingangsspannung Ue erfolgt über das von der Eingangsspannung Ue abhängige Arbeitsfrequenzspektrum der Pulsweitenmodulationseinrichtung PWM mittels des Frequenzfilters FF.

Das Frequenzfilter FF filtert beispielsweise bei der Variante 3 die Frequenzen von 5 kHz und/oder 15 kHz heraus, so dass die Umschalteinrichtung 51 anhand der Amplituden bei 5 und/oder 15 kHz erkennen kann, ob die Eingangsspannung größer oder kleiner als 250 V ist. Stellt die Umschalteinrichtung 51 fest, dass in der Ausgangsspannung Ua Frequenzanteile von 5 und/oder 15 kHz enthalten sind und dass deren Amplitude eine vorgegebene Mindestschwelle überschreitet, so schließt sie daraus, dass die Pulsweitenmodulationseinrichtung PWM die Frequenzen von 5 und/oder 15 kHz pulsweitenmoduliert und dass die Eingangsspannung Ue am Eingang der Stromversorgungseinrichtung 20 somit größer als 250 V ist. Im anderen Fall, wenn die Frequenzanteile bei 5 kHz und/oder 15 kHz die vorgegebene Mindestschwelle nicht erreichen, geht sie davon aus, dass die eingangsseitig anliegende Eingangsspannung Ue kleiner als 250 V ist.

Anhand der Amplituden der Signalfrequenzen bei 5 kHz und/oder 15 kHz kann das frequenzabhängige Steuerglied 50 also die Höhe der Eingangsspannung (größer oder kleiner als 250 V) erkennen, obwohl die Eingangsspannung Ue auf der Ausgangsseite der Stromversorgungseinrichtung 20 selbst nicht vorliegt.

Im Falle einer Eingangsspannung Ue größer als 250 V kann die Umschalteinrichtung 51 somit den Transistor T des frequenzabhängigen Steuerglieds 50 einschalten und damit den Kondensator C parallel zum Widerstand R2 schalten, wodurch sich die Reaktionszeit des Soll-Ist-Vergleichers 60 auf eine Änderung der Ausgangsspannung Ua vergrößert und das Verhalten der aus der Stromversorgungseinrichtung 20, dem Spannungsbewertungsmodul 40 und dem Optokoppler OPTO gebildeten Regelschleife in Abhängigkeit von der Eingangsspannung Ue modifiziert wird.

Bei dem oben beschriebenen Ausführungsbeispiel wurde davon ausgegangen, dass das Frequenzfilter FF die Frequenzen von 5 und/oder 15 kHz herausfiltert und die Erkennung des Arbeitsfrequenzspektrums seitens der Umschalteinrichtung 51 anhand dieser beiden Frequenzen erfolgt. Alternativ ist es selbstverständlich möglich, dass das Frequenzfilter FF das Arbeitsfrequenzspektrum für eine Eingangsspannung Ue kleiner als 250 V erkennt und hierzu die Signalfrequenzen von 45 kHz und 55 kHz passieren lässt. In diesem Fall wird die Umschalteinrichtung 51 für diese beiden Frequenzen von 45 kHz und/oder 55 kHz prüfen, ob vorgegebene Amplitudenschwellen erreicht oder überschritten werden und mit welchem Arbeitsfrequenzspektrum die Pulsweitenmodulationseinrichtung PWM arbeitet bzw. ob die Eingangsspannung Ue größer oder kleiner als 250 V ist. Je nach dem Ergebnis der Auswertung der Signalfrequenzen bei 45 kHz und/oder 55 kHz kann dann ein Umschalten des Transistors T erfolgen, um den Kondensator Cf parallel zu dem Widerstand R2 zu schalten oder von dem Widerstand R2 zu trennen, wie dies bereits erläutert worden ist.

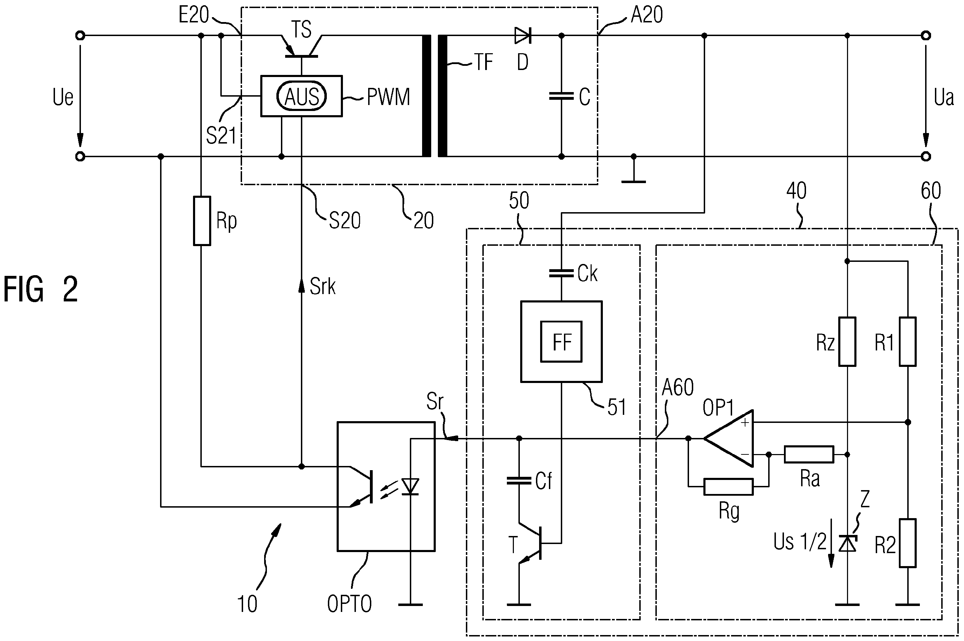

Die Figur 2 zeigt ein zweites Ausführungsbeispiel für eine Anordnung, bei der eine Regelung der Ausgangsspannung Ua am Ausgang einer potentialgetrennten Stromversorgungseinrichtung 20 in Abhängigkeit von deren Arbeitsfrequenzspektrum bzw. der Eingangsspannung Ue erfolgt.

Auch die Anordnung gemäß Figur 2 weist ein Spannungsbewertungsmodul 40 auf, das ein frequenzabhängiges Steuerglied 50 sowie einen Soll-Ist-Vergleicher 60 umfasst. Im Unterschied zu dem Ausführungsbeispiel gemäß Figur 1 ist das frequenzabhängige Steuerglied 50, insbesondere dessen Kondensator Cf, jedoch nicht an einen Eingang des Soll-Ist-Vergleichers 60 angeschlossen, sondern an einen Ausgang A60 des Soll-Ist-Vergleichers. So lässt sich in der Figur 2 erkennen, dass ein Kondensator Cf des frequenzabhängigen Steuerglieds 50 über einen Transistor T parallel zum Ausgang des Operationsverstärkers OP1 des Soll-Ist-Vergleichers 60 geschaltet ist, so dass durch ein Ein- oder Ausschalten des Kondensators Cf das zeitliche Verhalten, also das Ansteigen und Abfallen, der Ausgangsspannung des Operationsverstärkers OP1 beeinflusst wird.

Das Ein- und Ausschalten des Transistors T erfolgt mittels einer Umschalteinrichtung 51, die ein Frequenzfilter FF umfasst und über einen Koppelkondensator Ck mit der Ausgangsspannung Ua der Stromversorgungseinrichtung 20 beaufschlagt ist. Die Arbeitsweise der Umschalteinrichtung 51 kann beispielsweise der Arbeitsweise der Umschalteinrichtung 51 gemäß Figur 1 entsprechen, so dass auf die obigen Ausführungen verwiesen sei. Die Umschalteinrichtung 51 wird anhand des jeweiligen Arbeitsspektrums der Stromversorgungseinrichtung 20, das in der Ausgangsspannung Ua erkennbar bzw. frequenzmäßig auch enthalten ist, auf die Höhe der Eingangsspannung Ue am Eingang der Stromversorgungseinrichtung 20 schließen und den Transistor T in Abhängigkeit von der Höhe der Eingangsspannung Ue öffnen oder schließen, wie dies im Zusammenhang mit der Figur 1 bereits erläutert worden ist.

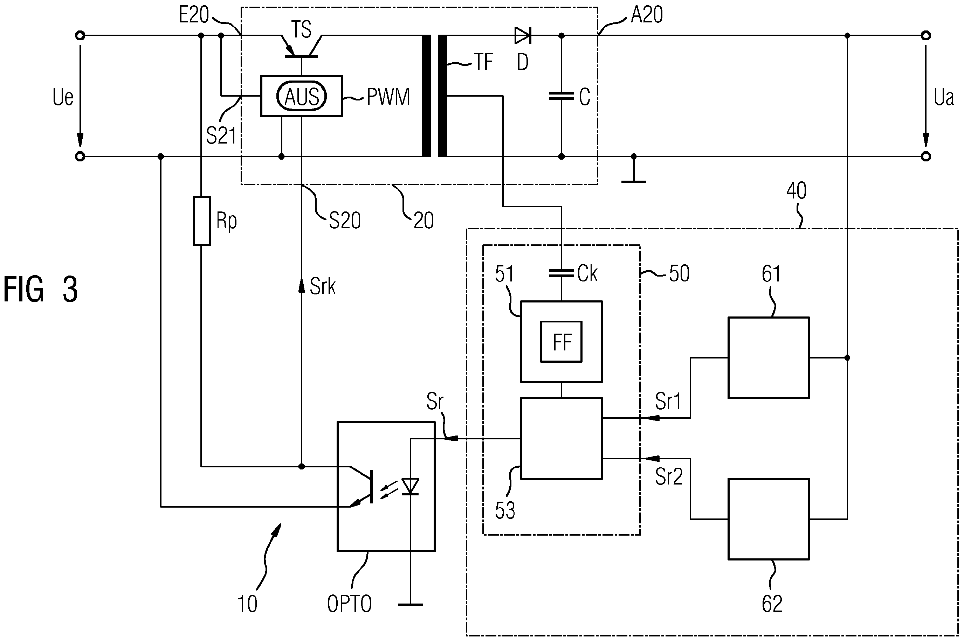

In der Figur 3 ist ein drittes Ausführungsbeispiel für eine Anordnung gezeigt, bei der das Regelverhalten von der an einer Stromversorgungseinrichtung 20 anliegenden Eingangsspannung Ue abhängt. Bei der Anordnung gemäß Figur 3 weist ein Spannungsbewertungsmodul 40 zwei Soll-Ist-Vergleicher 61 und 62 auf, deren Arbeitsweise unterschiedlich ist. Beispielsweise kann der Soll-Ist-Vergleicher 61 auf eine Änderung der Ausgangsspannung Ua schneller reagieren als der Soll-Ist-Vergleicher 62.

Zwischen den beiden Soll-Ist-Vergleichern 61 und 62 und dem Optokoppler OPTO ist bei dem Ausführungsbeispiel gemäß Figur 3 ein frequenzabhängiges Steuerglied 50 geschaltet, das einen Multiplexer 53 umfasst. Der Multiplexer 53 wird von einer Umschalteinrichtung 51, in der ein Frequenzfilter FF enthalten ist, angesteuert. Die Umschalteinrichtung 51 steht über einen Koppelkondensator Ck mit der Ausgangsspannung Ua der Stromversorgungseinrichtung 20 in Verbindung.

Die Umschalteinrichtung 51 wird in Abhängigkeit von dem Arbeitsfrequenzspektrum der Stromversorgungseinrichtung 20 den Multiplexer 53 derart ansteuern, dass entweder das Ausgangssignal Sr1 des Soll-Ist-Vergleichers 61 oder das Ausgangssignal Sr2 des Soll-Ist-Vergleichers 62 als Rückmeldesignal Sr zum OPTO-Koppler gesandt wird. Die Umschalteinrichtung 51 wird dabei denjenigen der beiden Soll-Ist-Vergleicher 61 oder 62 zum Erzeugen des Rückmeldesignals Sr auswählen, der für die jeweilige Eingangsspannung Ue am Eingang der Stromversorgungseinrichtung 20 besser geeignet ist. Die Erkennung der Höhe der Eingangsspannung Ue am Eingang E20 der Stromversorgungseinrichtung 20 erfolgt dabei über das jeweilige Arbeitsfrequenzspektrum der Stromversorgungseinrichtung 20, wie dies bereits im Zusammenhang mit den Figuren 1 und 2 erläutert wurde; diesbezüglich sei auf die obigen Ausführungen verwiesen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden Weiterhin sollen hier begrifflich mit Veränderungen des zeitlichen Verhaltens auch Variationen einer Mittelwertbildung und variable Glättungen der zwangsläufig vorhandenen Frequenzen im Regelkreis von der Ausgangsspannung Ua bis zum Rückmeldesignal Sr eingeschlossen sein.

## Patentansprüche

1. Anordnung (10)
- mit einer potenzialgetrennten Stromversorgungseinrichtung (20), die aufweist: einen Eingang (E20) zum Anlegen einer Eingangsspannung (Ue), einen vom Eingang (E20) potenzialgetrennten Ausgang (A20) zur Ausgabe einer geregelten Ausgangsspannung (Ua) und einen Steueranschluss (S20), an dem ein Steuersignal (Srk) zum Erhöhen oder Erniedrigen der Ausgangsspannung (Ua) angelegt werden kann, und
- mit einem Spannungsbewertungsmodul (40), das an den Ausgang (A20) der Stromversorgungseinrichtung (20) angeschlossen ist und an ein potenzialtrennendes Bauelement (OPTO) ein Rückmeldesignal (Sr) liefert, das von der Spannungshöhe der Ausgangsspannung (Ua) abhängt,
- wobei das Spannungsbewertungsmodul (40) derart ausgestaltet ist, dass das Rückmeldesignal (Sr) zusätzlich von dem von der Eingangsspannung (Ue) abhängigen Arbeitsfrequenzspektrum der Stromversorgungseinrichtung (20) abhängig ist,
- wobei das Spannungsbewertungsmodul (40) zumindest zwei unterschiedlich arbeitende Soll-Ist-Vergleicher (61, 62), die unterschiedliche Ausgangssignale (Sr1, Sr2) erzeugen, und ein frequenzabhängiges Steuerglied (50) umfasst,
- wobei die Soll-Ist-Vergleicher (61, 62) ein Vergleichssignal in Abhängigkeit von der Spannungshöhe der Ausgangsspannung (Ua) erzeugen,
- wobei das frequenzabhängige Steuerglied (50) die Arbeitsweise des Spannungsbewertungsmoduls (40) in Abhängigkeit von dem Arbeitsfrequenzspektrum der Stromversorgungseinrichtung (20) beeinflusst,
- wobei das frequenzabhängige Steuerglied (50) derart ausgestaltet ist, dass es von den Soll-Ist-Vergleichern (61, 62) jeweils einen in Abhängigkeit von dem Arbeitsfrequenzspektrum der Stromversorgungseinrichtung (20) zur Erzeugung des Rückmeldesignals (Sr) auswählt.

2. Anordnung (10)
- mit einer potenzialgetrennten Stromversorgungseinrichtung (20), die aufweist: einen Eingang (E20) zum Anlegen einer Eingangsspannung (Ue), einen vom Eingang (E20) potenzialgetrennten Ausgang (A20) zur Ausgabe einer geregelten Ausgangsspannung (Ua) und einen Steueranschluss (S20), an dem ein Steuersignal (Srk) zum Erhöhen oder Erniedrigen der Ausgangsspannung (Ua) angelegt werden kann, und
- mit einem Spannungsbewertungsmodul (40), das an den Ausgang (A20) der Stromversorgungseinrichtung (20) angeschlossen ist und an ein potenzialtrennendes Bauelement (OPTO) ein Rückmeldesignal (Sr) liefert, das von der Spannungshöhe der Ausgangsspannung (Ua) abhängt,
- wobei das Spannungsbewertungsmodul (40) derart ausgestaltet ist, dass das Rückmeldesignal (Sr) zusätzlich von dem von der Eingangsspannung (Ue) abhängigen Arbeitsfrequenzspektrum der Stromversorgungseinrichtung (20) abhängig ist,
- wobei das Spannungsbewertungsmodul (40) einen Soll-Ist-Vergleicher (60) und ein frequenzabhängiges Steuerglied (50) umfasst,
- wobei der Soll-Ist-Vergleicher (60) ein Vergleichssignal in Abhängigkeit von der Spannungshöhe der Ausgangsspannung (Ua) erzeugt,
- wobei das frequenzabhängige Steuerglied (50) die Arbeitsweise des Spannungsbewertungsmoduls (40) in Abhängigkeit von dem Arbeitsfrequenzspektrum der Stromversorgungseinrichtung (20) beeinflusst,
- indem ein zwischen einem Kondensator (Cf) und einem Bezugspotential geschalteter Transistor (T) durch Öffnen einen Kondensator (Cf) von dem Soll-Ist-Vergleicher (60) trennen kann,
- und indem durch Auf- und Entladen des Kondensators (Cf), das Ausgangssignal des Soll-Ist-Vergleichers (60) und damit die Änderungsgeschwindigkeit des Rückmeldesignals (Sr) verändert wird.

3. Anordnung (10) nach Anspruch 1 oder 2,
**dadurch gekennzeichnet, dass** die Stromversorgungseinrichtung (20) derart ausgestaltet ist, dass sie in Abhängigkeit von der Höhe der an die Stromversorgungseinrichtung angelegten Eingangsspannung (Ue) und/oder in Abhängigkeit von der Höhe des von der Stromversorgungseinrichtung (20) aufgenommenen Eingangsstroms ihr Arbeitsfrequenzspektrum verändert.

4. Anordnung (10) nach Anspruch 3,
**dadurch gekennzeichnet, dass** die Stromversorgungseinrichtung (20) derart ausgestaltet ist, dass sie ein erstes Arbeitsfrequenzspektrum auswählt, wenn die Eingangsspannung (Ue) und/oder der Eingangsstrom einen vorgegebenen Schwellenwert überschreitet, und ein zweites Arbeitsfrequenzspektrum auswählt, wenn die Eingangsspannung (Ue) und/oder der Eingangsstrom den vorgegebenen Schwellenwert unterschreitet.

5. Anordnung (10) nach einem der voranstehenden Ansprüche,
**dadurch gekennzeichnet, dass** ein frequenzabhängiges Steuerglied (50) des Spannungsbewertungsmoduls (40) mindestens ein Frequenzfilter (FF) umfasst, das anhand von Spannungssprüngen, Spannungsänderungen oder Wechselspannungsanteilen der Ausgangsspannung (Ua), der Ausgangsspannung vor einer Gleichrichtung, der Spannung an einem Zwischenabgriff einer ausgangsseitigen Wicklung des Transformators (TF) oder der Spannung an einer Hilfswicklung des Transformators (TF) die Arbeitsweise des Spannungsbewertungsmoduls (40) von einer ersten Arbeitsweise auf eine zweite Arbeitsweise oder umgekehrt umstellt, wobei die Spannungssprünge, Spannungsänderungen oder Wechselspannungsanteile die Arbeitsfrequenz oder die Arbeitsfrequenzen der potenzialgetrennten Stromversorgungseinrichtung (20) repräsentieren.

6. Anordnung (10) nach einem der Ansprüche 2 bis 5,
**dadurch gekennzeichnet, dass** der Soll-Ist-Vergleicher (60) einen Steueranschluss (E60), einen Spannungsanschluss und einen Ausgang aufweist,
- wobei der Spannungsanschluss des Soll-Ist-Vergleichers (60) mittelbar oder unmittelbar mit der Ausgangsspannung (Ua) der Stromversorgungseinrichtung (20) beaufschlagt ist,
- wobei der Steueranschluss (E60) des Soll-Ist-Vergleichers (60) mit dem frequenzabhängigen Steuerglied (50) verbunden ist und von diesem angesteuert wird und
- wobei das frequenzabhängige Steuerglied (50) derart ausgestaltet ist, dass es das Ausgangssignal (Sr) des Soll-Ist-Vergleichers (60) durch Ansteuern des Steueranschlusses (E60) des Soll-Ist-Vergleichers (60) in Abhängigkeit von dem Arbeitsfrequenzspektrum der Stromversorgungseinrichtung (20) beeinflusst.

7. Anordnung (10) nach Anspruch 6,
**dadurch gekennzeichnet, dass** als Rückmeldesignal (Sr) des Spannungsbewertungsmoduls (40) das Ausgangssignal des Soll-Ist-Vergleichers (60) ausgegeben wird.

8. Anordnung (10) nach einem der Ansprüche 2 bis 7,
**dadurch gekennzeichnet, dass**
- das frequenzabhängige Steuerglied (50) zwischen den Soll-Ist-Vergleicher (60) und den Ausgang des Spannungsbewertungsmoduls (40) derart geschaltet ist, dass es das Ausgangssignal des Soll-Ist-Vergleichers (60) in Abhängigkeit von dem Arbeitsfrequenzspektrum der Stromversorgungseinrichtung (20) verändern kann, und
- als Rückmeldesignal (Sr) des Spannungsbewertungsmoduls (40) das von dem frequenzabhängigen Steuerglied (50) veränderte Ausgangssignal des Soll-Ist-Vergleichers (60) ausgegeben wird.

9. Anordnung (10) nach einem der voranstehenden Ansprüche 1 oder 5 bis 8,
**dadurch gekennzeichnet, dass** das Frequenzfilter (FF) mindestens einen Bandpass umfasst.

## Claims

1. Arrangement (10)
- with an isolated power supply device (20), which has: an input (E20) for applying an input voltage (Ue), an output (A20) isolated from the input (E20) for outputting a controlled output voltage (Ua) and a control terminal (S20), to which a control signal (Srk) can be applied for raising or lowering the output voltage (Ua), and
- with a voltage evaluation module (40), which is connected to the output (A20) of the power supply device (20) and supplies a feedback signal (Sr), which is dependent on the voltage level of the output voltage (Ua), to an isolated component (OPTO),
- wherein the voltage evaluation module (40) is configured so that the feedback signal (Sr) is additionally dependent on the operating frequency spectrum, which is dependent on the input voltage (Ue), of the power supply device (20),
- wherein the voltage evaluation module (40) comprises at least two differently operating target-actual comparators (61, 62), which generate different output signals (Sr1, Sr2), and comprises a frequency-dependent control element (50),
- wherein the target-actual comparators (61, 62) generate a comparison signal as a function of the voltage level of the output voltage (Ua),
- wherein the frequency-dependent control element (50) influences the mode of operation of the voltage evaluation module (40) as a function of the operating frequency spectrum of the power supply device (20),
wherein
- the frequency-dependent control element (50) is configured so that it selects in each instance one of the target-actual comparators (61, 62) to generate the feedback signal (Sr) as a function of the operating frequency spectrum of the power supply device (20).

2. Arrangement (10)
- with an isolated power supply device (20), which has: an input (E20) for applying an input voltage (Ue), an output (A20) isolated from the input (E20) for outputting a controlled output voltage (Ua) and a control terminal (S20), to which a control signal (Srk) can be applied for raising and lowering the output voltage (Ua), and
- with a voltage evaluation module (40), which is connected to the output (A20) of the power supply device (20) and supplies a feedback signal (Sr), which is dependent on the voltage level of the output voltage (Ua), to an isolated component (OPTO),
- wherein the voltage evaluation module (40) is configured so that the feedback signal (Sr) is additionally dependent on the operating frequency spectrum, which is dependent on the input voltage (Ue), of the power supply device (20),
- wherein the voltage evaluation module (40) comprises a target-actual comparator (60) and a frequency-dependent control element (50),
- wherein the target-actual comparator (60) generates a comparison signal as a function of the voltage level of the output voltage (Ua),
- wherein the frequency-dependent control element (50) influences the mode of operation of the voltage evaluation module (40) as a function of the operating frequency spectrum of the power supply device (20),
- by a transistor (T) connected between a capacitor (Cf) and a reference potential being able to separate from the target-actual comparator (60) by opening a capacitor (Cf),
- and by the output signal of the target-actual comparator (60) and thus the change in speed of the feedback signal (Sr) being changed by charging and discharging the capacitor (Cf).

3. Arrangement (10) according to claim 1 or 2, **characterised in that** the power supply device (20) is configured so that it changes its operating frequency spectrum as a function of the level of the input voltage (Ue) applied to the power supply device and/or as a function of the level of the input current received by the power supply device (20).

4. Arrangement (10) according to claim 3,
**characterised in that**
the power supply device (20) is configured so that it selects a first operating frequency spectrum, if the input voltage (Ue) and/or the input current exceeds a predetermined threshold value, and selects a second operating frequency spectrum if the input voltage (Ue) and/or the input current does not reach the predetermined threshold value.

5. Arrangement (10) according to one of the preceding claims,
**characterised in that**
a frequency-dependent control element (50) of the voltage evaluation module (40) comprises at least one frequency filter (FF), which converts the mode of operation of the voltage evaluation module (40) from a first mode of operation to a second mode of operation or vice versa on the basis of voltage jumps, changes in voltage or alternating voltage portions of the output voltage (Ua), the output voltage before rectification, the voltage at an intermediate socket of an output-side winding of the transformer (TF) or the voltage at an auxiliary winding of the transformer (TF), wherein the voltage jumps, changes in voltage or alternating voltage portions represent the operating frequency or the operating frequencies of the isolated power supply device (20).

6. Arrangement (10) according to one of claims 2 to 5, **characterised in that**
the target-actual comparator (60) has a control terminal (E60), a voltage terminal and an output,
- wherein the voltage terminal of the target-actual comparator (60) is applied directly or indirectly with the output voltage (Ua) of the power supply device (20),
- wherein the control terminal (E60) of the target-actual comparator (60) is connected to the frequency-dependent control element (50) and is controlled hereby and
- wherein the frequency-dependent control element (50) is configured so that it influences the output signal (Sr) of the target-actual comparator (60) by controlling the control terminal (E60) of the target-actual comparator (60) as a function of the operating frequency spectrum of the power supply device (20).

7. Arrangement (10) according to claim 6,
**characterised in that**
the output signal of the target-actual comparator (60) is output as a feedback signal (Sr) of the voltage evaluation module (40).

8. Arrangement (10) according to one of claims 2 to 7, **characterised in that**
- the frequency-dependent control element (50) is connected between the target-actual comparator (60) and the output of the voltage evaluation (40) so that it can change the output signal of the target-actual comparator (60) as a function of the operating frequency spectrum of the power supply device (20), and
- the output signal of the target-actual comparator (60) which is changed by the frequency-dependent control element (50) is output as a feedback signal (Sr) of the voltage evaluation module (40).

9. Arrangement (10) according to one of the preceding claims 1 or 5 to 8,
**characterised in that**
the frequency filter (FF) comprises at least one bandpass.

## Revendications

1. Montage (10)
- ayant un dispositif (20) d'alimentation en courant séparé en potentiel, qui a : une entrée (E20) d'application d'une tension (Ue) d'entrée, une sortie (A20) séparée en potentiel de l'entrée (E20) pour donner une tension (Ua) de sortie réglée et une borne (S20) de commande, où un signal (Srk) de commande peut être appliqué pour élever ou abaisser la tension (Ua) de sortie,
- ayant un module (40) d'évaluation de la tension, qui est connecté à la sortie (A20) du dispositif (20) d'alimentation en courant et qui fournit, à un composant (OPTO) séparant en potentiel, un signal (Sr) de retour, qui dépend du niveau de la tension (Ua) de sortie,
- dans lequel le module (40) d'évaluation de la tension est conformé de manière à ce que le signal (Sr) de retour dépende en outre du spectre de fréquence de travail, qui dépend de la tension (Ue) d'entrée, du dispositif (20) d'alimentation en courant,
- dans lequel le module (40) d'évaluation de la tension comprend au moins deux comparateurs (61, 62) consigne-réel travaillant différemment, qui produisent des signaux (Sr1, Sr2) de sortie différents, et un organe (50) de commande en fonction de la fréquence,
- dans lequel les comparateurs (61, 62) consigne-réel produisent un signal de comparaison en fonction du niveau de la tension (Ua) de sortie,
- dans lequel l'organe (50) de commande en fonction de la fréquence influe sur la façon de travailler du module (40) d'évaluation de la tension, en fonction du spectre de fréquence de travail du dispositif (20) d'alimentation en courant,
- dans lequel l'organe (50) de commande en fonction de la fréquence est conformé de manière à choisir, pour la production du signal (Sr) de retour, respectivement l'un des comparateurs (61, 62) consigne-réel en fonction du spectre de fréquence de travail du dispositif (20) d'alimentation en courant.

2. Montage (10)
- ayant un dispositif (20) d'alimentation en courant séparé en potentiel, qui a : une entrée (E20) d'application d'une tension (Ue) d'entrée, une sortie (A20) séparée en potentiel de l'entrée (E20) pour donner une tension (Ua) de sortie réglée et une borne (S20) de commande, où un signal (Srk) de commande peut être appliqué pour élever ou abaisser la tension (Ua) de sortie,
- ayant un module (40) d'évaluation de la tension, qui est connecté à la sortie (A20) du dispositif (20) d'alimentation en courant et qui fournit, à un composant (OPTO) séparant en potentiel, un signal (Sr) de retour, qui dépend du niveau de la tension (Ua) de sortie,
- dans lequel le module (40) d'évaluation de la tension est conformé de manière à ce que le signal (Sr) de retour dépende en outre du spectre de fréquence de travail, qui dépend de la tension (Ue) d'entrée, du dispositif (20) d'alimentation en courant,
- dans lequel le module (40) d'évaluation de la tension comprend un comparateur (60) consigne-réel et un organe (50) de commande en fonction de la fréquence,
- dans lequel le comparateur (60) consigne-réel produit un signal de comparaison en fonction du niveau de la tension (Ua) de sortie,
- dans lequel l'organe (50) de commande en fonction de la fréquence influe sur la façon de travailler du module (40) d'évaluation de la tension, en fonction du spectre de fréquence de travail du dispositif (20) d'alimentation en courant,
- par le fait qu'un transistor (T), monté entre un condensateur (Cf) et un potentiel de référence, peut, par ouverture, séparer un condensateur (Cf) du comparateur (60) consigne-réel,
- et par le fait qu'en chargeant et en déchargeant le condensateur (Cf), le signal de sortie du comparateur (60) consigne-réel, et ainsi la vitesse de variation du signal (Sr) de retour, est modifié.

3. Montage (10) suivant la revendication 1 ou 2,
**caractérisé en ce que**
le dispositif (20) d'alimentation en courant est conformé de manière à modifier, en fonction du niveau de la tension (Ue) appliquée au dispositif d'alimentation en courant et/ou en fonction du niveau du courant d'entrée reçu par le dispositif (20) d'alimentation en courant, son spectre de fréquence de travail.

4. Montage (10) suivant la revendication 3,
**caractérisé en ce que**
le dispositif (20) d'alimentation en courant est conformé de manière à ce qu'il choisisse un premier spectre de fréquence de travail, si la tension (Ue) d'entrée et/ou le courant d'entrée dépasse une valeur de seuil donnée à l'avance, et un deuxième spectre de fréquence de travail, si la tension (Ue) d'entrée et/ou le courant d'entrée est inférieur à la valeur de seuil donnée à l'avance.

5. Montage (10) suivant l'une des revendications précédentes, **caractérisé en ce que**
un organe (50) de commande en fonction de la fréquence du module (40) d'évaluation de la tension comprend au moins un filtre (FF) de fréquence, qui, à l'aide de sauts de tension, de variations de tension ou de proportions de tension alternative de la tension (Ua) de sortie, de la tension de sortie avant un redressement, de la tension à une prise intermédiaire d'un enroulement du côté de la sortie du transformateur (TF) ou de la tension à un enroulement auxiliaire du transformateur (TF), fait passer le mode de travail du module (40) d'évaluation de la tension d'un premier mode de travail et un deuxième mode de travail ou inversement, les sauts de tension, les variations de tension ou les proportions de tension alternative représentant la fréquence de travail ou la fréquence de travail du dispositif (20) d'alimentation en courant séparé en potentiel.

6. Montage (10) suivant l'une des revendications 2 à 5, **caractérisé en ce que**
le comparateur (60) consigne-réel a une borne (E60) de commande, une borne de tension et une sortie,
- dans lequel la borne de tension du comparateur (60) consigne-réel est soumise directement ou indirectement à la tension (Ua) de sortie du dispositif (20) d'alimentation en courant,
- dans lequel la borne (E60) de commande du comparateur (60) consigne-réel est reliée à l'organe (50) de commande en fonction de la fréquence et est commandée par celui-ci et
- dans lequel l'organe (50) de commande en fonction de la fréquence est conformé de manière à influencer le signal (Sr) de sortie du comparateur (60) consigne-réel, en commandant la borne (E60) de commande du comparateur (60) consigne-réel en fonction du spectre de fréquence de travail du dispositif (20) d'alimentation en courant.

7. Montage (10) suivant la revendication 6,
**caractérisé en ce que**
le signal de sortie du comparateur (60) consigne-réel est émis comme signal (Sr) de retour du module (40) d'évaluation de la tension.

8. Montage (10) suivant l'une des revendications 2 à 7, **caractérisé en ce que**
- l'organe (50) de commande en fonction de la fréquence est monté entre le comparateur (60) consigne-réel et la sortie du module (40) d'évaluation de la tension de manière pouvoir modifier le signal de sortie du comparateur (60) consigne-réel en fonction du spectre de fréquence de travail du dispositif (20) d'alimentation en courant, et
- le signal de sortie, modifié par l'organe (50) en fonction de la fréquence, du comparateur (60) consigne-réel est émis comme signal (Sr) de retour du module (40) d'évaluation de la tension.

9. Montage (10) suivant l'une des revendications précédentes 1 ou 5 à 8,
**caractérisé en ce que**
le filtre (FF) de fréquence comprend au moins un passe-bande.
